# EUROPÄISCHE PATENTANMELDUNG

(11) **EP 0 882 605 A2**
(43) Veröffentlichungstag der Anmeldung: **09.12.1998**
(21) Anmeldenummer: 98109144.0
(22) Anmeldetag: 20.05.1998
(51) Int. Cl.: B60C 11/00, B60C 11/03

(54) **Drehsinngebundene profilierte Lauffläche für Fahrzeugluftreifen**

(30) Priorität: 29.05.1997 DE 19722571
(71) Anmelder: Continental Aktiengesellschaft, 30165 Hannover (DE)
(72) Erfinder: Pfaff, Daniel, 30938 Burgwedel (DE)

(57) **Zusammenfassung**

Die Erfindung bezieht sich auf eine drehsinngebunden profilierte Lauffläche für einen Fahrzeugluftreifen mit Querrillen in zumindest einem der Reifenschulterbereiche. Um den Abrieb in zumindest einem der beiden Schulterbereiche, insbesondere im fahrzeuginneren, zu vergleichmäßigen, wird erfindungsgemäß vorgeschlagen, dass sich in den besagten Schulterbereichen enge Querrillen und weite Querrillen einander abwechseln und, dass im Drehsinn hinter jeder engen Querrille ein Profilklotz größerer Axialerstreckung und/oder größerer Umfangserstreckung angeordnet ist als hinter jeder weiten Querrille, wo ein Profilklotz kleinerer Axialerstreckung bzw. Umfangserstreckung angeordnet ist.

## Beschreibung

Die Erfindung bezieht sich auf eine drehsinngebunden profilierte Lauffläche für einen Fahrzeugluftreifen gemäß dem Oberbegriff des Patentanspruches 1. Demgemäß weist die Lauffläche in zumindest einem der Reifenschulterbereiche Querrillen auf.

Reifenschultern sind anfällig für einen über dem Umfang ungleichmäßigen Abrieb. Ungleichmäßiger Abrieb führt neben einer Verkürzung der Lebensdauer des Reifens zu einer Erhöhung des Abrollgeräusches, sowohl bei der Messung vom Fahrzeuginneren her als auch bei der Vorbeifahrt. Ungleichmäßiger Abrieb entsteht dort, wo aufeinander folgende Klötze unterschiedlich steif sind - die steiferen Klötze übernehmen überproportional viel Reibkraft und reiben dadurch schneller ab als weichere Klötze - oder unterschiedlich weit voneinander entfernt sind, weil weit auseinander stehende Klötze höher belastet werden als dicht beieinander stehende. Unglückseeligerweise ist für die Massenverteilungskonstanz über der Profiltiefe die Mitvariation der Negativ-Erstreckung in Reifenumfangsrichtung mit der Positiv-Erstreckung optimal, siehe dazu DE-OS 40 22 615 oder EP-PS 0 467 138 B1. Durch die große Beabstandung wird das Problem des beschleunigten Abriebes der in Umfangsrichtung langen Klötze noch verstärkt.

EP-PA 0 591 002 schlägt vor, unterschiedliche Klotzhöhen zu verwenden zur Bekämpfung des aufgezeigten Problemes. Nach unserer Einschätzung ist damit aber nicht über der gesamten Lebensdauer des Reifens eine Geräuschverbesserung möglich. Überdies wird hierdurch die Qualitätskontrolle erschwert. Überdies kann die dort vorgeschlagene Kompensation nur für eine bestimmte Radlast bemessen sein; je nachdem an welches Fahrzeug ein Reifen montiert wird, stellen sich aber ganz unterschiedliche Radlasten ein.

Aufgabe der Erfindung ist es, den Abrieb in zumindest einem der beiden Schulterbereiche zu vergleichmäßigen; dieses Problem stellt sich besonders heftig für die fahrzeuginnere Reifenschulter.

Ausgehend von den gattungsgemäßen Merkmalen wird die Aufgabe erfindungsgemäß dadurch gelöst, dass sich in den Schulterbereichen enge Querrillen und weite Querrillen einander abwechseln und, dass im Drehsinne hinter jeder engen Querrille ein Profilklotz größerer Axialerstreckung und/oder größerer Umfangserstreckung angeordnet ist als hinter jeder weiten Querrille, wo ein Profilklotz kleinerer Axialerstreckung angeordnet ist.

Der Klotz, der im Drehsinne hinter einer weiten Rille angeordnet ist, ist durch das vorlaufende große Negativ zwar hoch auf Abrieb belastet, durch seine kleinere Erstreckung in der axialen und/oder in der Umfangsrichtung wird seine Steifigkeit aber so weit gesenkt, dass er dieser Belastung in ausreichendem Maße ausweicht, sodass seine Abriebgeschwindigkeit gesenkt wird, wobei die Abriebgeschwindigkeit des nach der schmalen Rille nachfolgenden größeren Klotzes gesteigert wird, sodass es insgesamt zu einer Vergleichmäßigung der Abriebgeschwindigkeiten kommt.

Das Abwechseln enger und weiter Querrillen im Schulterbereich bedingt, dass dort die Anzahl der engen und weiten Querrillen gleich hoch ist; diese Anzahl heiße im Folgenden "n"; in dem bzw. in jedem betreffenden Schulterbereich sind also insgesamt 2n Querrillen angeordnet. Gemäß Anspruch 2 sind in zumindest einem Bereich, der zur Reifenmitte hin an den oder die Schulterbereich(e) anschließt, zusätzliche Querrillen angeordnet und zwar in der Anzahl n, also halb so viele wie in besagter Schulter. Damit die Positive zwischen diesen zusätzlichen Querrillen nicht zu massig und die Entwässerungswege nicht zu lang werden, empfiehlt Anspruch 2, dass diese zusätzlichen Querrillen spitzwinkliger zur Umfangsrichtung verlaufen als die Querrillen in dem bzw. den erfindungsgemäß gestalteten Schulterbereich(en).

Zur Verbesserung der Entwässerungsleistung und zur Entkopplung von der Schulter empfiehlt sich gemäß Anspruch 3, dass die Grenze zwischen einem erfindungsgemäß gestalteten Reifenschulterbereich mit seinen insgesamt 2n Querrillen und einem zur Reifenmitte hin anschließenden Bereich mit seinen insgesamt n Querrillen in spitzerer Ausrichtung zur Umfangsrichtung durch (je) eine zickzackförmige Umfangsrille gebildet ist. Gemäß Anspruch 4 ist diese zickzackförmige Umfangsrille abwechselnd aus kurzen und langen Schenkeln zusammengesetzt in einer dort näher spezifizierten Weise, die unter Ausnutzung der Drehsinnbindung eine besonders glückliche Wasserabführung ermöglicht in Zusammenwirkung mit den dort einmündenden zusätzlichen Querrillen.

Die erfindungsgemäße Aufeinanderfolge enger und weiter Querrillen braucht nur in einer der beiden Reifenschultern angeordnet zu sein. Wenn sie nur in einer der beiden Reifenschultern angeordnet ist, der Reifen also asymmetrisch profiliert ist, dann ist dies vorzugsweise die Reifenschulter, die dazu vorgesehen ist, auf der fahrzeuginneren Seite montiert zu werden. Auf der fahrzeugäußeren Schulter scheint das zu lösende Problem des ungleichmäßigen Abriebes nämlich infolge des höheren Abriebes bei Kurvenfahrt, der zu einem vergleichmäßigenden Effekt führt, geringer zu sein als auf der kurveninneren Schulter.

Unbeschadet dessen ist es aber auch bei einem asymmetrisch profilierten und damit seitengebunden zu montierenden Reifen möglich, auch auf der fahrzeugäußeren Schulter eine eine erfindungsgemäße Folge einander abwechselnder enger und weiter Querrillen anzuordnen mit jeweils einem größeren Klotz hinter einer engen Querrille und einem kleineren Klotz hinter einer weiten Querrille. Dies ist auch dann möglich, wenn auf beiden Schultern eine verschieden hohe Anzahl von Querrillen angeordnet ist, wobei es in solchem Falle bevorzugt ist, wenn die Querrillenanzahl auf der fahrzeuginneren Reifenschulter höher als auf der fahrzeugäußeren Reifenschulter ist.

Unabhängig davon, ob beide oder nur eine der Reifenschultern in erfindungsgemäßer Weise gestaltet sind, ist es gemäß Anspruch 6 vorteilhaft, wenn auf der Reifenschulter, die dazu bestimmt ist, auf der fahrzeugäußeren Seite montiert zu werden, eine Anzahl m von Querrillen angeordnet ist, wobei m im Vergleich zur Gesamtanzahl 2n von Querrillen auf der anderen, also fahrzeuginneren, Reifenschulter um 20 % bis 50 % der Anzahl 2n kleiner ist als die Anzahl 2n.

Die in den beiden Absätzen zuvor empfohlene kleinere Querrillenanzahl auf der fahrzeugäußeren Reifenschulter ermöglicht eine besonders steife Klotzausbildung daselbst, womit sich ein sehr sportliches Trockenhandling erzielen lässt.

Gemäß Anspruch 5 ist dabei besonders bevorzugt nur auf der fahrzeuginneren Reifenschulter die insgesamt doppelte Anzahl 2n von Querrillen anzuordnen wie in dem zur Reifenmitte hin anschließenden Bereich mit seinen n Querrillen; demgemäß gibt es dann sowohl auf der fahrzeugäußeren Schulter als auch in dem Bereich zwischen den beiden Schultern nur n Querrillen, auf der fahrzeuginneren Schulter hingegen 2n Querrillen.

Die Erfindung wird nachfolgend anhand einiger Figuren näher erläutert. Es zeigt:
- Fig. 1: perspektivisch einen Luftreifen mit einer Lauffläche, deren Profilierung in einem Ausschnitt dargestellt ist,
- Fig. 2: einen Ausschnitt aus der Abwicklung einer erfindungsgemäßen symmetrischen Lauffläche in Draufsicht mit geraden Querrillen im axial mittleren Laufflächenbereich,
- Fig. 3: einen Ausschnitt aus der Abwicklung einer erfindungsgemäßen, nicht-seitengebundenen Lauffläche in Draufsicht mit parabelförmig gebogenen Querrillen und zusätzlichen kreuzenden Querrillen im axial mittleren Laufflächenbereich,
- Fig. 4: einen Ausschnitt aus der Abwicklung einer erfindungsgemäßen, seitengebundenen Lauffläche in Draufsicht mit parabelförmig gebogenen Querrillen und zusätzlichen kreuzenden Querrillen im axial mittleren Laufflächenbereich und höherer Querrillenanzahl auf der fahrzeuginneren Schulter als auf der fahrzeugäußeren Schulter.

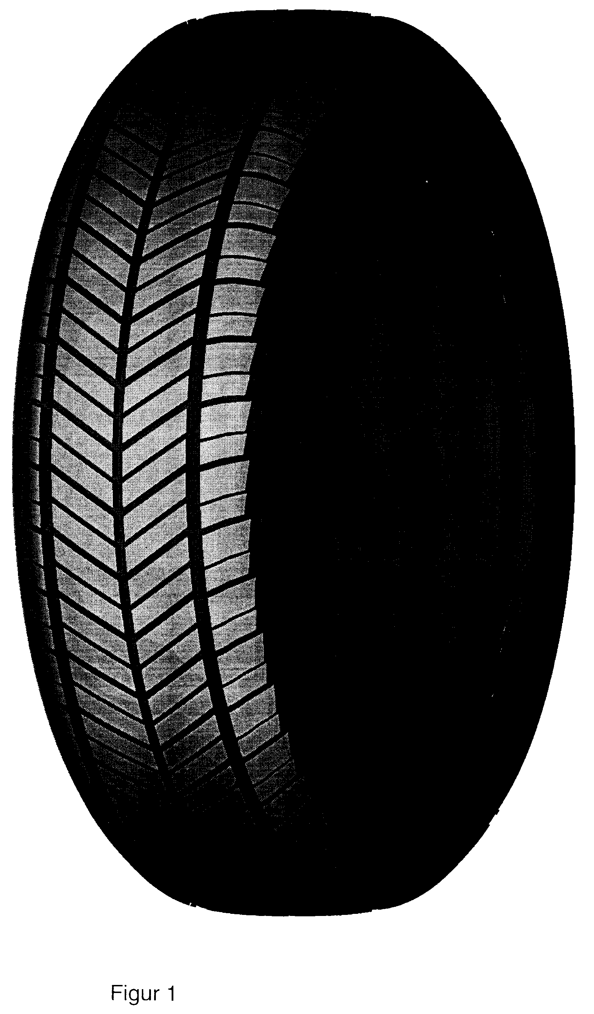

**Figur 1** zeigt der Übersicht halber in schräger Draufsicht einen Luftreifen 1 mit einer Lauffläche 2, deren Profilierung in einem Ausschnitt dargestellt ist. Selbstverständlich soll sich diese Profilierung über dem gesamten Umfang fortsetzen. Diese Figur ist nach den Regeln der ISO-Projektion maßstabsgerecht erstellt.

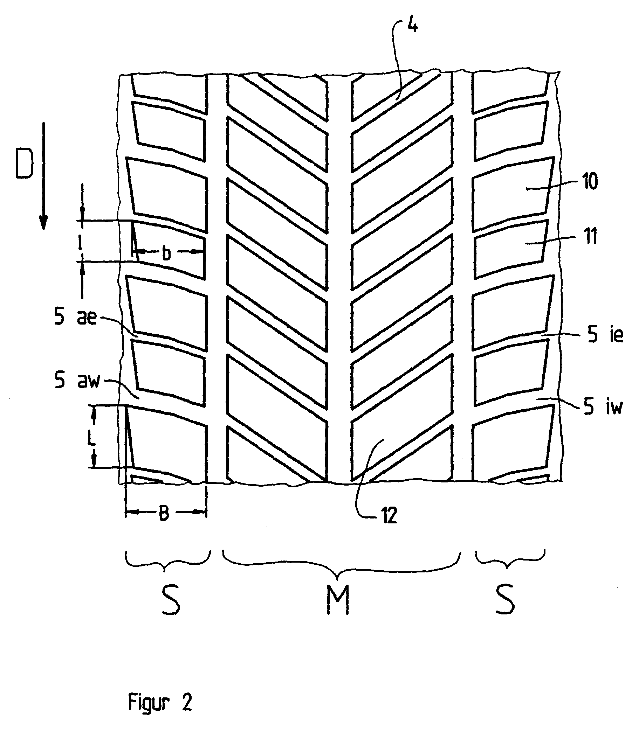

Weil es für die Erfindung nur auf die Profilierung des Laufstreifens 2 ankommt, beschränken sich die folgenden Figuren 2 bis 4 auf eine ausschnittsweise Darstellung desselben. Auch diese weiteren Figuren werden einem - größeren - Maßstabe gerecht.

**Figur 2** zeigt einen Ausschnitt aus der Abwicklung einer erfindungsgemäßen symmetrischen Lauffläche 2 eines Fahrzeugluftreifens 1 in Draufsicht. Er weist im axial mittleren Laufflächenbereich M zwei Spuren von parallelogrammförmigen Klötzen 12 auf. Innerhalb jeder dieser beiden Spuren von Klötzen 12 sind Querrillen 4 angeordnet, die gerade sind. Sie sind zur Axialen in einem Winkel von 34° geneigt.

Axial außerhalb des in an sich bekannter Weise ausgebildeten Mittenbereiches M ist in den beiden Schulterbereichen S links und rechts je eine Reihe von Schulterklötzen 10, 11 angeordnet. Diese Schulterklötze 10 und 11 gelangen in Bodenkontakt. Abweichend von Figur 1 können sie auch soweit nach axial außen verlängert sein, dass sie stetig bis in das sogenannte Seitendecor übergehen, das ist der Randbereich, der bei Geradeausfahrt nicht mehr in Bodenkontakt gerät, wohl aber bei scharfer Kurvenfahrt und beim Erklettern von Bordsteinkanten. Weil das Seitendecor nichts mit der Erfindung zu tun hat, ist es hier nicht dargestellt.

Die Profilklötze 11 und 10 in den Schultern S sind in solcher Weise zu Paaren angeordnet, dass hinter je einem kleinen Klotz 11 eine enge Querrille 5e und dahinter ein großer Klotz 10 angeordnet ist. Dahinter folgt eine weite Querrille 5w und dann das nächste Paar von Profilklötzen 11 und 10, die wiederum nur durch eine enge Querrille 5e voneinander getrennt sind. Die Weite we jeder engen Querrille 5e beträgt bei PKW-Reifen vorzugsweise 4 % bis 10 % der jeweiligen Pitch-Länge, in diesem Beispiel 7 % davon. Die Weite ww jeder weiten Querrille 5w beträgt bei PKW-Reifen vorzugsweise 12 % bis 20 % der jeweiligen Pitch-Länge, in diesem Beispiel 17 % davon. Die genannten Prozentzahlen beziehen sich auf den Fall, dass jeweils ein benachbarter großer und kleiner Klotz zu einer Pitch-Länge gehören; es ist natürlich auch möglich, allerdings komplizierter, eine Pitchfolge doppelter Pitchanzahl in den Schultern zu verwenden, sodass jeder Pitch gerade einen Klotz oder gerade eine Querrille umfasst; in solchem Falle sind die zuvor genannten Prozentzahlen zu verdoppeln.

Jeder "große" Klotz 10 ist in diesem Ausführungsbeispiel sowohl seiner Breite B - auch Axialerstreckung genannt - nach als auch seiner Länge L - auch Umfangserstreckung genannt - nach größer als der vorangehende, zum gleichen Klotzpaar gehörende "kleine" Klotz 11 mit seiner Breite b und seiner Länge l; für die Verwirklichung der Erfindung reicht es aber aus, wenn die großen Klötze 10 in einer ihrer beiden Erstreckungen größer sind als die jeweils zugeordneten kleinen Klötze 11.

Dadurch, dass beim Abrollen mit dem gezeigten Drehsinne D die größeren Klötze als letztes eines Klotzpaares oder eventuelle auch einer größeren Klotzgruppe auslaufen, wird eine Egalisierung, also eine Vergleichmäßigung des Abriebes erzielt.

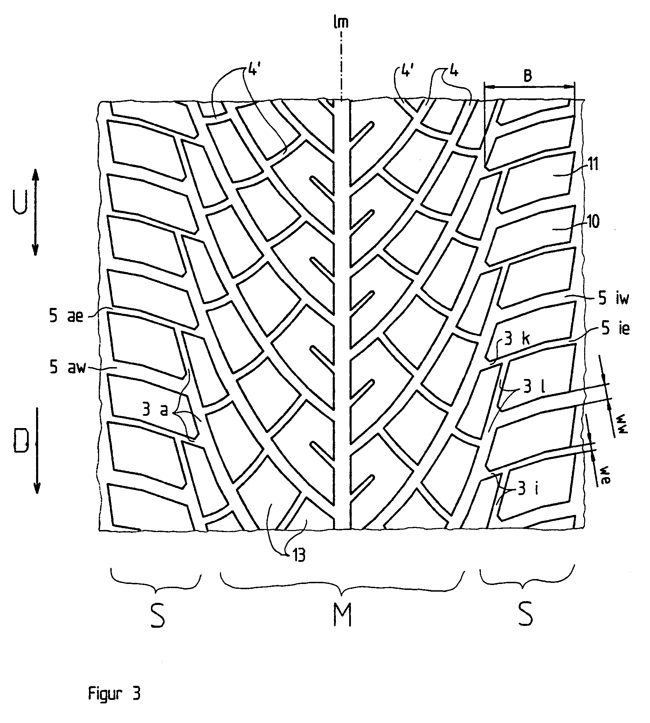

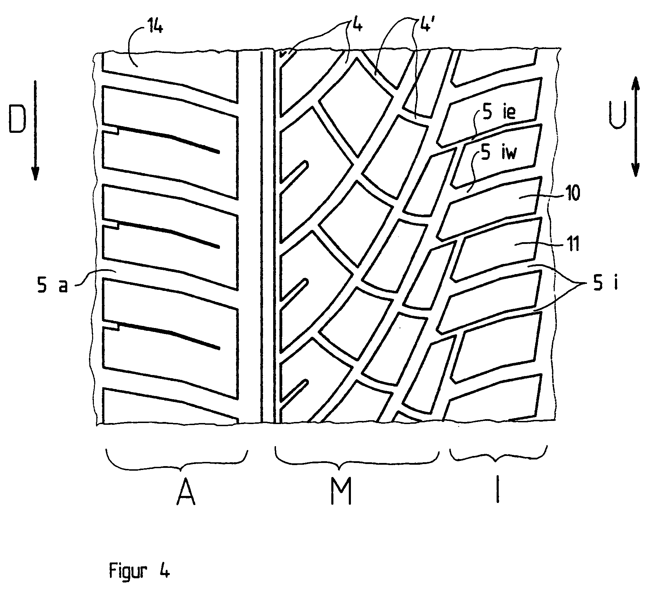

Als Schultern S (**Figuren 2 und 3**) bzw. I und A (**Figur 4**) werden im Rahmen dieser Anmeldung die beiden axial äußeren Bereiche der Lauffläche 2 bezeichnet, die nach axial außen hin bis zur Bodenaufstandsflächengrenze reichen, wie sie sich unter der nach ETRTO für den betreffenden Reifen vorgesehenen höchstzulässigen Radlast und dem zugehörigen Luftdruck darstellt. Von den Bodenaufstandsflächengrenzen ausgehend können sich die Reifenschultern S bzw. I und A um 12 % bis 30 % nach axial innen zur Laufflächenmitte lm hin erstrecken.

**Figur 3** zeigt einen Ausschnitt aus der Abwicklung einer anderen erfindungsgemäßen, nicht-seitengebundenen Lauffläche in Draufsicht. Er weist im axial mittleren Laufflächenbereich M links und rechts der Laufflächenmitte lm je eine Spur von Querrillen 4 auf, die im wesentlichen diagonal verlaufen und zwar in solcher Orientierung, dass man beim Gehen entgegen dem Drehsinn D nach axial außen gelangt; im Unterschied zur Figur 2 sind hiesige Querrillen 4 aber parabelförmig gebogen. Die Biegung der Querrillen 4 ist hier neuartigerweise so herum orientiert, dass diese Querrillen 4 von der Laufflächenmitte lm zu den Schultern S hin folgend monoton spitzwinkliger zur Umfangsrichtung U verlaufen.

Zusätzlich sind in diesem Mittenbereich diagonal verlaufende Rillen 4' inverser Orientierung angeordnet, also so orientiert diagonal verlaufend, dass man beim Gehen entlang einer solchen im vorgesehenen Drehsinne D zur jeweiligen axial äußeren Seite des Reifens hin gelangt. Diese Rillen 4' beginnen axial innen vorzugsweise etwa rechtwinklig an eine Querrille 4 anschließend, kreuzen dann im Drehsinne weiter gehend zwei weitere Querrillen 4 um schließlich axial außen an der Grenze zur Reifenschulter S etwa rechtwinklig an eine weitere Querrille 4 anzuschließen. Die sich kreuzenden Querrillen 4 und 4' zerteilen den Laufflächenmittenbereich M in Klötze 13, die zumindest überwiegend durch diagonale Kanten begrenzt sind.

Links und rechts der Laufflächenmitte lm sind die Querrillen 4 in an sich bekannter Weise um etwa eine halbe Pitch-Länge gegeneinander versetzt, um so das Laufgeräusch weiter zu reduzieren.

Axial außerhalb des Mittenbereiches M ist in den beiden Schulterbereichen S links und rechts je eine Reihe von Schulterklötzen 10, 11 angeordnet. Diese Schulterklötze 10 und 11 gelangen in Bodenkontakt. Abweichend von Figur 1 können sie auch soweit nach axial außen verlängert sein, dass sie stetig bis in das bereits begrifflich definierte, hier nicht gezeigte Seitendecor übergehen.

Die Profilklötze 11 und 10 sind erfindungsgemäß in solcher Weise zu Paaren angeordnet, dass hinter je einem schmalen Klotz 11 eine enge Querrille 5e und dahinter ein breiter Klotz 10 angeordnet ist. Dahinter folgt eine weite Querrille 5w und dann das nächste Paar von Profilklötzen 11 und 10, die wiederum nur durch eine enge Querrille 5e voneinander getrennt sind.

Jeder "große" Klotz 10 ist in diesem Ausführungsbeispiel also nur seiner Breite B nach - nicht seiner Länge L nach - größer als der vorangehende, zum gleichen Klotzpaar gehörende "kleine" Klotz 11 mit seiner Breite b und seiner Länge l; dies reicht für die Verwirklichung der Erfindung aus. Die großen Klötze 10 sind hier sogar geringfügig kürzer als die kleinen Klötze 11. Dadurch, dass beim Abrollen im Drehsinne D die ganz deutlich breiteren Klötze 10 als letztes eines Klotzpaares aus der Bodenaufstandsfläche laufen, wird eine Vergleichmäßigung des Abriebes erzielt.

Der Laufflächenmittenbereich M ist in dieser Ausführung zu beiden Seiten hin durch je eine zickzackförmige, im wesentlichen in Umfangsrichtung U verlaufende Nut 3 von den Schulterbereichen S abgegrenzt. Diese Nut ist zusammengesetzt aus einander abwechselnden kurzen Schenkeln 3k und langen Schenkeln 3l. Zwecks guter Wasserabfuhr bei geringem Laufgeräusch fluchten die langen Schenkel 3l mit den Querrillen 4 des Mittenbereiches M, die kurzen Schenkel 3k mit den Querrillen 5 des angrenzenden Schulterbereiches S, vorzugsweise - wie hier gezeigt - mit den engen Querrillen 5e.

Die hier gezeigte Ausbildung genügt den Ansprüchen 1 bis 4. Ferner zeigt sie ähnlich dem Anspruch 5 das Merkmal, dass in den Reifenschultern S die gleiche Anzahl enger Querrillen 5e und die gleiche Anzahl weiter Querrillen 5w angeordnet ist wie im Laufflächenmittenbereich M an - etwa diagonalen - Querrillen 4. Also weisen die Schultern S insgesamt die doppelte Anzahl von Querrillen 5e und 5w wie der Mittenbereich; allerdings zeigt sie dieses Merkmal auf beiden Reifenschultern.

**Figur 4** zeigt einen Ausschnitt aus der Abwicklung einer anderen erfindungsgemäßen Lauffläche 2 in Draufsicht mit ebenfalls parabelförmig gebogenen Querrillen 4 und zusätzlichen kreuzenden Querrillen 4' im axial mittleren Laufflächenbereich M. Die hier gezeigte Ausführung ist jedoch seitengebunden: Die Profilklötze 14 einer der beiden Reifenschultern sind wesentlich gröber ausgebildet als die Klötze 10 und 11 der anderen Reifenschulter; ein Reifen mit solcher Lauffläche sollte so montiert werden, dass die erstgenannte Reifenschulter auf der fahrzeugäußeren Seite angeordnet wird, weshalb auf sie im Folgenden mit dem Zeichen "A" Bezug genommen wird. Entsprechend sollte die andere Reifenschulter auf der fahrzeuginneren Seite angeordnet werden und wird im Folgenden mit "I" angesprochen. Analog weisen die kleinen Indices "a" oder "i" auf die Anordnung der Querrillen 5 auf der fahrzeugäußeren bzw. -inneren Schulter hin.

Die Anzahl der Querrillen 5ie und 5iw auf der fahrzeuginneren Schulter I ist jeweils gleich der Anzahl der im Laufflächenmittenbereich M angeordneten Querrillen 4. Auf der fahrzeuginneren Schulter I gibt es also insgesamt doppelt so viele Querrillen 5i wie im Laufflächenmittenbereich an Querrillen 4. Auf der fahrzeugäußeren Schulter A hingegen sind weniger Querrillen 5a angeordnet, bevorzugt - wie hier dargestellt - zwei Drittel der Gesamtanzahl von fahrzeuginneren Querrillen 5i, also 33 % weniger. Ausgehend von dem bevorzugten Verhältnis 1:2 zwischen der Anzahl der Querrillen 4 im Bereich M und den Querrillen 5i auf der Schulter I, ist dies äquivalent zu der Aussage, dass bevorzugt - wie hier dargestellt - die Anzahl m der Querrillen 5a in der fahrzeugäußeren Schulter A um (nur) 33 % größer ist als die Anzahl n der Querrillen 4 im Mittelbereich M.

Die Klötze 5a der fahrzeugäußeren Schulter A sind nicht nur durch eine größere Breite, sondern auch durch eine im Vergleich zur fahrzeuginneren Schulter I größere Länge infolge der geringeren Querrillenanzahl m gröber ausgebildet und begünstigen dadurch einen sehr raschen Querkraftaufbau bei Lenkbewegungen zur fahrzeuginneren Seite hin.

Auch diese Lauffläche 2 ist dazu bestimmt, sich im gezeigten Drehsinne D zu drehen. Die Profilklötze 11 und 10 der fahrzeuginneren Schulter I sind erfindungsgemäß in solcher Weise zu Paaren angeordnet, dass hinter je einem schmalen Klotz 11 eine enge Querrille 5ie und dahinter ein breiter Klotz 10 angeordnet ist. Dahinter folgt eine weite Querrille 5iw und dann das nächste Paar von Profilklötzen 11 und 10, die wiederum nur durch eine enge Querrille 5ie voneinander getrennt sind.

Jeder "große" Klotz 10 der inneren Reifenschulter I ist auch in diesem Ausführungsbeispiel, wie analog schon in dem nach Figur 3, nur seiner Breite B nach größer als der vorangehende, zum gleichen Klotzpaar gehörende "kleine" Klotz 11 mit seiner Breite b; dies reicht für die Verwirklichung der Erfindung. Allerdings sollte die antagonistisch wirkende relative Kleinheit der Länge L des größeren Klotzes 10 nicht so weit gehen, dass der Klotz 10 der Fläche nach nicht mehr der größere ist.

Dadurch, dass beim Abrollen die ganz deutlich breiteren Klötze 10 als letztes eines Klotzpaares aus der Bodenaufstandsfläche laufen, wird eine Vergleichmäßigung des Abriebes auf der fahrzeuginneren Schulter erzielt. Gerade bei sportlicher Fahrweise, für die diese seitengebundene Ausführung der Erfindung gedacht ist, konzentriert sich das durch die Variation der Pitch-Längen verursachte Problem des ungleichmäßigen Schulterabriebes auf die fahrzeuginnere Schulter A.

Gemäß einer Erkenntnis der Erfinder hat nämlich die verschärfte durch Querkraftkonzentration daselbst verursachte Abriebbelastung der fahrzeugäußeren Schulter im Gegensatz zu einer durch Längskraftkonzentration verursachten verschärften Abriebbelastung einen vergleichmäßigenden Effekt; deshalb ist die Anwendung der erfindungsgemäßen Lehre auf der fahrzeuginneren Reifenschulter von Sportwagen besonders wichtig. - Bei Fahrzeugen sehr hoher Schwerpunktlage, insbesonderen schweren LKW, ihren Anhängern und doppelstöckigen Reisebussen, ganz besonders Kühlwagen zum hängenden Transport halbierter Schlachttiere, kann hingegen umgekehrt die Anwendung der erfindungsgemäßen Lehre auf der fahrzeugäußeren Reifenschulter besonders wichtig sein.

Eine Bezugszeichenliste ist Bestandteil der Beschreibung.

### Bezugszeichenliste

1 Fahrzeugluftreifen
2 Lauffläche von Fahrzeugluftreifen 1
3 im wesentlichen in Umfangsrichtung U verlaufende, zickzackförmige Nuten in Lauffläche 2 an der zur Laufflächenmitte lm hin weisenden Grenze von Schulterbereichen S oder A oder I 3ik kurze Schenkel von 3 3il lange Schenkel von 3
4 Querrillen angeordnet im Bereich M zwischen den beiden Reifenschultern S bzw. - bei seitengebundener Ausführung - A und I. Diese Querrillen verlaufen so orientiert diagonal, dass man beim Gehen entlang einer solchen im vorgesehenen Drehsinne D zur fahrzeugäußeren Seite (A) hin gelangt
4' zusätzliche diagonal verlaufende Rillen (4') inverser Orientierung, also so orientiert diagonal verlaufend, dass man beim Gehen entlang einer solchen im vorgesehenen Drehsinne D zur fahrzeuginneren Seite (I) hin gelangt
5 im wesentlichen quer verlaufende Nuten in Reifenschulter(n)
   5e enge Exemplare der Nuten 5 5ae enge Quernuten auf fahrzeugäußerer Schulter A 5ie enge Quernuten auf fahrzeuginnerer Schulter I
   5w weite Exemplare der Nuten 5 5aw weite Quernuten auf fahrzeugäußerer Schulter A 5iw weite Quernuten auf fahrzeuginnerer Schulter I
   5a Querrille 5 auf fahrzeugäußerer Schulter A
   5i Querrille 5 auf fahrzeuginnerer Schulter I
10 Profilklotz größerer Axialerstreckung B und/oder Umfangserstreckung L, angeordnet in einer oder beiden Reifenschulter(n)
11 Profilklotz kleinerer Axialerstreckung b und/oder Umfangserstreckung l, angeordnet in einer oder beiden Reifenschulter(n)
12 parallelogrammförmige, in zwei Spuren angeordnete Klötze im axial mittleren Laufflächenbereich M (Figur 2)
13 durch zumindest überwiegend diagonale Kanten begrenzte Klötze im mittleren Laufflächenreich M (Figuren 3 und 4)
b Erstreckung in axialer Richtung (auch "Breite" genannt) der Klötze 11
l Erstreckung in Umfangsrichtung (auch "Länge" genannt) der Klötze 11
lm Laufflächenmitte
we Weite der Querrillen 5ie
ww Weite der Querrillen 5iw
A die Reifenschulter, die dazu bestimmt ist, an der Fahrzeugaußenseite montiert zu werden, kurz: fahrzeugäußere Schulter
B Erstreckung in axialer Richtung (auch "Breite" genannt) der Klötze 10
D Drehsinn von 1
I die Reifenschulter, die dazu bestimmt ist, an der Fahrzeuginnenseite montiert zu werden, kurz: fahrzeuginnere Schulter
L Erstreckung in Umfangsrichtung (auch "Länge" genannt) der Klötze 10
M etwa mittlerer Bereich der Lauffläche 2, zwischen den Schulterbereichen S bzw. I und A
S Schulterbereiche bei nicht seitengebundenen Ausführungen
U Umfangsrichtung

## Patentansprüche

1. An einen Drehsinn (D) gebundene Lauffläche (2) für einen Fahrzeugluftreifen (1) mit Querrillen (5, 5e, 5w sowie 5ie, 5iw und/oder 5ae, 5aw) in zumindest einem der Reifenschulterbereiche (S, I und/oder A),
**dadurch gekennzeichnet,**
- dass sich in den besagten Bereichen (S, I bzw. A) enge Querrillen (5e, 5ie bzw. 5ae) und weite Querrillen (5w, 5iw bzw. 5aw) einander abwechseln und,
- dass im Drehsinn (D) hinter jeder engen Querrille (5e, 5ie bzw. 5ae) ein Profilklotz (10) größerer Axialerstreckung (B) und/oder größerer Umfangserstreckung (L) angeordnet ist als hinter jeder weiten Querrille (5w, 5iw bzw. 5aw), wo ein Profilklotz (11) kleinerer Axialerstreckung (b) bzw. Umfangserstreckung (l) angeordnet ist.

2. Lauffläche (2) nach Anspruch 1 mit einer Anzahl n von engen Querrillen (5e, 5ie bzw. 5ae) und der gleichen Anzahl n von weiten Querrillen (5w, 5iw bzw. 5aw) entlang dem Umfang in zumindest einer der Reifenschulterbereiche (S, I und/oder A), dadurch gekennzeichnet, dass in zumindest einem der zur Reifenmitte hin an den oder die Schulterbereich(e) (S, I bzw. A) anschließenden Bereich (M) die Anzahl n weiterer Querrillen (4) angeordnet ist, wobei diese weiteren Querrillen (4) spitzwinkliger zur Umfangsrichtung U verlaufen als die Querrillen (5e, 5w bzw. 5ie und 5iw und/oder 5ae und 5aw) in dem bzw. den Schulterbereich(en) (S, I bzw. A).

3. Lauffläche (2) nach Anspruch 2, dadurch gekennzeichnet, dass die Grenze zwischen einem Reifenschulterbereich (S, I bzw. A) mit seinen insgesamt 2n von Querrillen (5e, 5w bzw. 5ie und 5iw bzw. 5ae und 5aw) und einem zur Reifenmitte hin anschließenden Bereich (M) mit seinen insgesamt n Querrillen (4) in spitzerer Ausrichtung zur Umfangsrichtung (U) durch (je) eine zickzackförmige Umfangsrille (3) gebildet ist.

4. Lauffläche (2) nach Anspruch 3, dadurch gekennzeichnet, dass die im wesentlichen in Umfangsrichtung (U) verlaufende(n), zickzackförmige(n) Nut(en) (3) (je) eine Repetition von Paaren aus je einem kurzen Schenkel (3k) und einem langen Schenkel (3l) aufweist, wobei die längeren Schenkel (3l) in einem Winkel zwischen 10° und 25° zur Umfangsrichtung (U) geneigt sind und zwar in solcher Orientierung, dass man beim Gehen entlang einem jeden der längeren Schenkel (3l) im Drehsinne (D) näher zur Laufflächenmitte (lm) gelangt, und wobei die kürzeren Schenkel (3k) in einem Winkel zwischen 55° und 85° zur Umfangsrichtung (U) geneigt sind, wobei jeder der längeren Schenkel (3l) an je eine der spitwinkliger zur Umfangsrichtung (U) verlaufenden Nuten (4) im wesentlichen knickfrei (das heißt mit einem Knick von höchstens 3°) fluchtend anschließt.

5. Lauffläche (2) nach Anspruch 2 oder 3 oder 4, dadurch gekennzeichnet, dass sie in der Weise asymmetrisch ausgebildet ist, dass nur auf der Reifenschulter (I), die dazu bestimmt ist, auf der fahrzeuginneren Seite montiert zu werden, die insgesamt doppelte Anzahl 2n von Querrillen (5iw und 5ie) angeordnet ist wie in dem zur Reifenmitte hin anschließenden Bereich (M) mit seinen n Querrillen (4).

6. Lauffläche (2) nach Anspruch 1, besonders bevorzugt nach Anspruch 5, dadurch gekennzeichnet, dass auf der Reifenschulter (A), die dazu bestimmt ist, auf der fahrzeugäußeren Seite montiert zu werden, eine Anzahl m von Querrillen (5a) angeordnet ist, wobei m im Vergleich zur Gesamtanzahl 2n von Querrillen (5ie, 5iw) auf der anderen Reifenschulter (I) um 20 % bis 50 % der Anzahl 2n kleiner ist als die Anzahl 2n.
